(19) Europäisches Patentamt

European Patent Office

Office européen des brevets

(11) Veröffentlichungsnummer : **0 368 147 B1**

# (12) EUROPÄISCHE PATENTSCHRIFT

(45) Veröffentlichungstag der Patentschrift :
**11.03.92 Patentblatt 92/11**

(51) Int. Cl.$^5$: **C02F 11/00**, C02F 1/46,
A01C 3/00

(21) Anmeldenummer : **89120288.9**

(22) Anmeldetag : **02.11.89**

(54) Verfahren und Vorrichtung zur Behandlung von organischen Schlämmen.

(30) Priorität : **05.11.88 DE 3837628**

(43) Veröffentlichungstag der Anmeldung :
**16.05.90 Patentblatt 90/20**

(45) Bekanntmachung des Hinweises auf die
Patenterteilung :
**11.03.92 Patentblatt 92/11**

(84) Benannte Vertragsstaaten :
**AT BE CH DE ES FR GB GR IT LI LU NL SE**

(56) Entgegenhaltungen :
EP-A- 0 109 349
EP-A- 0 251 221
FR-A- 1 321 895
GB-A- 622 691

(73) Patentinhaber : **Brösamle, Peter, Dipl.-Ing.**
**Lindenstrasse 18**
**W-2054 Wiershop (DE)**

(72) Erfinder : **Brösamle, Peter, Dipl.-Ing.**
**Lindenstrasse 18**
**W-2054 Wiershop (DE)**

(74) Vertreter : **Mey, Klaus-Peter, Dr.-Ing.**
**Dipl.-Wirtsch.-Ing. et al**
**Patentanwalt Aachener Strasse 710**
**W-5020 Frechen 4 (DE)**

**Beschreibung**

Die Erfindung betrifft ein Verfahren und eine Vorrichtung zur Behandlung von organischen Schlämmen, insbesondere von Flüssigmist, mit mindestens einer im Flüssigmist angeordneten Elektrode sowie mindestens einer Gegenelektrode und Anlegen einer Gleichspannungsquelle, wobei unter Verwendung beliebiger Elektroden eine Wanderung von Ionen im Flüssigmist angeregt wird.

Als Elektroden werden neben bekannten Metallen, wie Eisen oder Aluminium und deren Legierungen auch inerte Materialien, vorzugsweise Graphite oder leitende Kunststoffe verwendet, deren hauptsächlicher Vorteil darin liegt, daß sie nicht oder nur selten ersetzt werden müssen, wodurch die Betriebskosten erheblich gesenkt werden können. Zweckmäßigerweise wird für Elektroden und Gegenelektroden gleiches Material verwendet. Neben Kostenvorteilen bei der Lagerhaltung können derartige Elektrodensysteme auf einfache Weise umgepolt werden, um die Wanderungsrichtung der Metallionen umzukehren. Die eingeleitete Stromstärke wird in einem Bereich zwischen etwa 0,1 und etwa 10 A, vorzugsweise im Bereich zwischen etwa 1 bis 6 A eingestellt. Gute Homogenisierungserfolge lassen sich in diesem Bereich bei Inert- und Eisenelektroden, abhängig von der Behältergröße und der Elektrodenfläche erreichen. Die im Flüssigmist zur Wanderung auf diese Weise angeregten Ionen können auch zum Schwingen um eine Nullage gebracht werden. Eine derartige Verfahrenweise wird in der europäischen Patentanmeldung 87 109 173.2 (EP-A-0251221) beschrieben.

Der Erfindung liegt die Aufgabe zugrunde, das obengenannte Verfahren zur Behandlung von organischen Schlämmen weiter zu verbessern und insbesondere eine deutliche Verbesserung der Homogenität des Flüssigmistes am Ende von verfahrensbedingten Zwischenlagerzeiten in kürzerer Zeit zu erreichen. Eine weitere Teilaufgabe besteht darin, die Hygienekonditionen weiter zu verbessern.

Diese Aufgabe wird erfindungsgemäß dadurch gelöst, daß im Flüssigmist eine konstante Basisspannung aufgebaut und gehalten wird, überlagert von einer periodisch unterbrochenen Überspannung, einer sogenannten Intervall-Überspannung. Es wurde dabei festgestellt, daß eine Strukturzerstörung von Grobpartikeln und Faserstoffen, insbesondere Stroh und ähnlichen Zellulosestrukturen in kürzester Zeit erfolgt. Vorteilhaft kann somit bei dieser Verfahrensweise auf kostenintensive Schneidwerkpumpen verzichtet werden. Ebenfalls konnte festgestellt werden, daß durch die beschriebene erfindungsgemäße Behandlung die unerwünschte Volumenvergrößerung unterbleibt. Die störende Geruchsemission des Flüssigmistes wird ganz wesentlich herabgesetzt. Die erfindungsgemäß behandelte Gülle eignet sich, bedingt durch die gute Homogenität, auch vorzüglich für den Einsatz in Biogas- Anlagen.

In einer bevorzugten Ausgestaltung des erfindungsgemäßen Verfahrens wird die Überspannung gleichpolig aufgegeben, wodurch möglicherweise auftretende Störfelder vermieden werden.

Als besonders vorteilhaft hat sich eine Verfahrensweise herausgestellt, bei der das Verhältnis von Basisspannung zu Überspannung im Bereich von 1:0,3 bis 1:3, vorzugsweise zwischen 1:1,5 und 1:2,5 beträgt. Zweckmäßigerweise beträgt dabei die anzulegende Überspannung zwischen 4 bis 50 V. Die Schaltintervalle der Überspannung liegen im Bereich von 1/1000 Sekunden bis 5 Minuten, vorzugsweise 1 bis 10 Sekunden.

In vorteilhafter Ausgestaltung der Erfindung werden die anliegenden Spannungen - Basisspannung und Überspannung - nach einem konstanten Zyklus umgepolt. Mit dieser Maßnahme kann man in günstiger Weise die Abnutzungszeit der Elektroden verlängern und die Passivierung stark verzögern.

Ferner ist vorgesehen, daß der Stromfluß zeitweilig unterbrochen wird, wodurch mit großem Vorteil Betriebskosten eingespart werden.

Vorrichtungsmäßig wird die gestellte Aufgabe dadurch gelöst, daß ein Grundgerät mit Schaltung zur Versorgung der Elektroden mit Basisspannung und dazu ein mit Strom/Spannungs-Sperren gegen die Steuerung der Grundlast abgesicherter, gleichsinnig arbeitender Stufentrafo mit Gleichrichter vorgesehen ist, dessen Überspannung mittels einstellbarem Unterbrecher auf die Basisspannung überlagerbar ist.

Nach einer Vorrichtungsvariante kann es besonders zweckmäßig sein, wenn die Überspannungsschaltung in mindestens einem Elektrodenkopf angeordnet ist, wobei beispielsweise statt der Transformatorenschaltung eine Kondensatorschaltung vorgesehen sein kann, womit jeweils nur die in der Zelluloseschicht wirksamen Elektroden mit Überspannung versorgt werden.

Anhand von Versuchen wird im folgenden aufgezeigt, welche überraschenden Resultate die erfindungsgemäße Behandlung von Flüssigmist ergibt.

Beispiel 1:

In einem Laborversuch wurden zwei gleiche Kunststoff-Behälter (im folgenden als Test- Kontrollbehälter bezeichnet) mit Abmessungen von ca. 0,60 x 0,60 x 0,45 Meter mit je 30 Liter Rindergülle aus einem Betrieb mit Milchvieh-Haltung gefüllt. In jeden Behälter wurden in die Gülle jeweils zwei Hände voll Stroh gleicher Herkunft mit einer durchschnittlichen Halmlänge von ca. 0,40 m unter die Gülleoberfläche eingebracht, wobei die erste Teilmenge waagerecht und parallel zur Stromfluß-Richtung, die zweite Teilmenge ebenfalls waagerecht aber rechtwinklig zur Stromfluß-Richtung zu liegen kam. Beide Behälter wurden dann mittels je zwei Eisenelektroden mit Längen von ca. 0,30 m und Durchmessern von ca. 40 mm (voll in die Gülle eingetaucht) an je eine Behandlungsanlage angeschlossen, wobei allerdings nur die Gülle im Testbehälter erfindungsgemäß, d.h. zusätzlich zur Basisspannung mit einer Intervall-Überspannung behandelt wurde. Die Basisspannung wurde in beiden Anlagen auf 12 Volt eingestellt, wodurch sich in beiden Behältern ein Strom von ca. 2 Ampere einstellte.

Im Testbehälter wurde ab Beginn der Behandlungszeit die Basis-Spannung von 12 V von der Intervall-Überspannung im Verhältnis 1:2 mit Hilfe eines im Sekundentakt arbeitenden Blinkrelais überlagert, das von einem separaten 24-V-Trafo mit zur Basisspannung flußgleicher Gleichspannung versorgt wurde. Sperrdioden sorgten für den Stromfluß zwischen den Eisenelektroden und damit durch die Gülle.

Nach 6 Tagen wiesen die rechtwinklig zur Strom-Richtung im Kontrollbehälter liegenden Halme deutliche Flecken von dunkler Farbe auf, die in Stromrichtung eingelegten Halme nur vereinzelte Flecken, die auf den Beginn einer Zersetzung des Fasermaterials hindeuteten. Im Testbehälter waren die dunklen Flecken an beiden Halmschichten schon sehr deutlich zu erkennen, bei der rechtwinklig zur Stromrichtung eingelegten Halmgruppe waren ca. 50 % der Halme mindestens einmal auseinandergebrochen.

Nach 10 Tagen waren im Kontrollbehälter die dunklen Flecken überall deutlich ausgeprägt und einzelne Halmbrüche festzustellen. Im Testbehälter waren praktisch keine ganzen Halme mehr zu finden, auch in der parallel zur Stromrichtung eingebrachten Teilmenge. Die aufzufindenden Bruchstücke waren vergleichsweise klein, einige wenige Bruchstücke hatten noch eine Länge bis ca. 7 cm.

Die bis 30 Tage weitergeführte Stromeinleitung ergab im Kontrollbehälter die schon erwähnte weitgehende Strukturauflösung. Im Testbehälter dagegen hatte sich die Gülle bereits deutlich separiert in eine braungelb gefärbte obere Flüssigkeitsschicht und eine darunter gebildete strukturlose, sehr weiche Schlammschicht.

Beispiel 2:

Ein Feldversuch wurde in drei Milchviehbetrieben durchgeführt. In allen drei Betrieben (I, II, III) hatte sich die Forderung ergeben, die während der Sommerzeit täglich frisch zulaufende, stark mit langfasrigen Futterresten versetzte Gülle schnellstmöglich in einen für die Gülledüngung optimalen, d. h. auch umweltverträglichen Zustand zu überführen.

Die drei Betriebe (I - III) wurden nach folgender Zusammenstellung mit einer Vorrichtung zur Erzeugung der unter erfindungsgemäßen Überlagerungs-Gleichspannung ausgerüstet:
  – Betrieb I mit 20 V auf Basis 8 V bei ca. 1,5 A (Spannungsverhältnis 1:2,5)
  – Betrieb II mit 20 V auf Basis 12 V bei ca. 2,5 A (Spannungsverhältnis 1:1,67)
  – Betrieb III mit 20 V auf Basis 10 V mit ca. 2 A (Spannungsverhältnis 1:2)
Die Ergebnisse, bezogen auf die verfahrensbedingt in allen drei Betrieben (I - III) vorhandenen, deutlich ausgeprägten, mit sehr viel langfasrigem Material durchsetzten Schwimmdecken, konnten nach ca. 6 Wochen Behandlungszeit wie folgt zusammengefaßt werden:
  – Im Betrieb I zeigte sich ein Schwimmschichtabbau von ca. 80 cm auf nur noch ca. 20 cm (Differenz = 60 cm),
  – im Betrieb II zeigte sich ein Schwimmschichtabbau von ca. 50 cm auf noch ca. 15 cm (Differenz = 35 cm),
  – im Betrieb III zeigte sich ein Schwimmschichtabbau von ca. 70 cm auf noch ca. 10 cm (Differenz = 60 cm).
Zusammenfassend konnte festgestellt werden, daß sich die Strukturen nach der erfindungsgemäßen Verfahrensweise in allen Betrieben sehr gut zersetzt hatten. Die übrigen Positiveffekte der erfindungsgemäßen Güllebehandlung zeigten sich in einer Geruchsverminderung, verbesserten Hygieneeigenschaften, einem besonders leichten Aufmischen der Gülle, gutem Fließverhalten und hervorragender Pflanzenverträglichkeit.

Die erfindungsgemäßen Maßnahmen sind nicht auf die genannten Beispiele und Versuchsanordnungen beschränkt. So können beispielsweise, ohne den Rahmen der Erfindung zu verlassen, die Verhältnisse von Basis- zu Überspannung im Bereich von 99:1 bis 1:99 liegen. Die eigentliche Grenze im Verhältnis von Basis- zu Überspannung muß da gezogen werden, wo die aufgelagerte Überspannung beim kleinsten wirksamen Intervall im Zusammenhang mit den Gesetzmäßigkeiten des Ohm-schen Gesetzes ein Ansteigen des Stromflusses verursacht. Das Arbeitsprinzip besteht darin, daß die Reaktionsträgheit der im Ohm-schen Gesetz zusammengefaßten physikalischen Zusammenhänge ausgenutzt wird. Dabei kann es auch sinnvoll sein, wenn Basis- und/oder Überspannung zeitweilig abgeschaltet werden. Die jeweilige Betriebsweise ist in Anpassung an spezielle Gegebenheiten dem Fachmann anheimgestellt.

**Patentansprüche**

1. Verfahren zur Behandlung von organischen Schlämmen, insbesondere von Flüssigmist, mit mindestens einer im Flüssigmist angeordneten Elektrode sowie mindestens einer Gegenelektrode und Anlegen einer Gleichspannungsquelle, wobei unter Verwendung beliebiger Elektroden eine Wanderung von Ionen im Flüssigmist angeregt wird, dadurch gekennzeichnet, daß im Flüssigmist eine konstante Basisspannung aufgebaut und gehalten wird, überlagert von einer periodisch unterbrochenen Überspannung.

2. Verfahren nach Anspruch 1, dadurch gekennzeichnet, daß die Überspannung gleichpolig aufgegeben wird.

3. Verfahren nach Anspruch 1 oder 2, dadurch gekennzeichnet, daß das Verhältnis von Basisspannnung zu Überspannung im Bereich von 1:0,3 bis 1:3, vorzugsweise zwischen 1:1,5 und 1:2,5 beträgt.

4. Verfahren nach einem oder mehreren der Ansprüche 1 bis 3, dadurch gekennzeichnet,daß die anzulegende Uberspannung zwischen 4 bis 50 V beträgt.

5. Verfahren nach einem oder mehreren der Ansprüche 1 bis 4, dadurch gekennzeichnet, daß die Schaltintervalle der Überspannung im Bereich von 1/1000 Sekunden bis 5 Minuten betragen, vorzugsweise 1 bis 10 Sekunden.

6. Verfahren nach einem oder mehreren der Ansprüche 1 bis 5, dadurch gekennzeichnet, daß die anliegenden Spannungen - Basisspannung und Überspannung - nach einem konstanten Zyklus umgepolt werden.

7. Verfahren nach einem oder mehreren der Ansprüche 1 bis 6, dadurch gekennzeichnet, daß der Stromfluß zeitweilig unterbrochen wird.

8. Vorrichtung zur Behandlung von organischen Schlämmen, insbesondere von Flüssigmist, mit mindestens einer im Flüssigmist angeordneten Elektrode sowie mindestens einer Gegenelektrode und Anlegen einer Gleichspannungsquelle, wobei unter Verwendung beliebiger Elektroden eine Wanderung von Ionen im Flüssigmist angeregt wird, zur Durchführung des Verfahren nach einem oder mehreren der vorhergehenden Ansprüche, dadurch gekennzeichnet, daß ein Grundgerät mit Schaltung zur Versorgung der Elektroden mit Basisspannung und dazu ein mit Strom/Spannungs-Sperren gegen die Steuerung der Grundlast abgesicherter, gleichsinnig arbeitender Stufentrafo mit Gleichrichter vorgesehen ist, dessen Überspannung mittels einstellbarem Unterbrecher auf die Basisspannung überlagerbar ist.

9. Vorrichtung nach Anspruch 8, dadurch gekennzeichnet, daß die Überspannungsschaltung in mindestens einem Elektrodenkopf angeordnet ist.

**Claims**

1. A method of treating organic slurries, more particularly liquid manure, with at least one electrode arranged in the liquid manure and at least one counter electrode and application of a d.c. voltage source, in which while using any desired electrodes migration of ions in the liquid manure is stimulated, characterised in that a constant base voltage is built up and maintained in the liquid manure, superimposed by a periodically interrupted overvoltage.

2. A method according to claim 1, characterised in that the overvoltage is fed with uniform polarity.

3. A method according to claim 1 or 2, characterised in that the ratio between the base voltage and the overvoltage is in the region of 1:0.3 to 1:3, preferably between 1:1.5 and 1:2.5.

4. A method according to one or more of claims 1 to 3, characterised in that the overvoltage to be applied is between 4 and 50 V.

5. A method according to one or more of claims 1 to 4, characterised in that the switching intervals of the overvoltage are in the region of 1/1000 seconds to 5 minutes, preferably 1 to 10 seconds.

6. A method according to one or more of claims 1 to 5, characterised in that the applied voltages - base voltage and overvoltage - are reversed in polarity according to a constant cycle.

7. A method according to one or more of claims 1 to 6, characterised in that the current flow is intermittently interrupted.

8. Equipment for treating organic slurries, more particularly liquid manure, with at least one electrode arranged in the liquid manure and at least one counter electrode and application of a d.c. voltage source, in which while using any desired electrodes migration of ions is stimulated in the liquid manure, for carrying out the method according to one or more of the preceding claims, characterised in that a basic device with a circuit for supplying the electrodes with base voltge and also a step transformer with rectifier are provided, said transformer operating in the same sense and protected with current/voltage barriers against the control of the base load, wherein the overvoltage of the said transformer can be superimposed on the base voltage with the aid of an adjustable interrupter.

9. Equipment according to claim 8, characterised in that the overvoltage circuit is arranged in at least one electrode head.

**Revendications**

1. Procédé pour le traitement de boues organiques, en particulier de fumier liquide, à l'aide d'au moins une électrode disposée dans le fumier liquide ainsi qu'au moins une contre-électrode et application d'une source de tension continue, une migration d'ions dans le fumier liquide étant excitée par utilisation d'électrodes quelconques, caractérisé en ce que dans le fumier liquide est produite et maintenue une tension de base constante, surmontée d'une surtension périodiquement interrompue.

2. Procédé selon la revendication 1, caractérisé en ce que la surtension est appliquée de façon homopolaire.

3. Procédé selon la revendication 1 ou 2, caractérisé en ce que le rapport de la tension de base à la surtension est dans la plage allant de 1:0,3 à 1:3, de préférence comprise entre 1:1,5 et 1:2,5.

4. Procédé selon l'une quelconque des revendications 1 à 3, caractérisé en ce que la surtension à appliquer est comprise entre 4 et 50 V.

5. Procédé selon l'une quelconque des revendications 1 à 4, caractérisé en ce que les intervalles de commutation de la surtension sont dans la plage allant de 1/1000 seconde à 5 minutes, de préférence de 1 à 10 secondes.

6. Procédé selon l'une quelconque des revendications 1 à 5, caractérisé en ce que les tensions - tension de base et surtension - appliquées sont à pôles inversés selon un cycle constant.

7. Procédé selon l'une quelconque des revendications 1 à 6, caractérisé en ce que le passage du courant est interrompu temporairement.

8. Dispositif pour le traitement de boues organiques, en particulier de fumier liquide, comportant au moins une électrode disposée dans le fumier liquide, ainsi qu'au moins une contre-électrode et avec application d'une source de tension continue, une migration d'ions dans le fumier liquide étant excitée par utilisation d'électrodes quelconques, pour la mise en oeuvre du procédé selon une ou plusieurs des revendications précédentes, caractérisé en ce que l'on prévoit un appareil de base avec commutation pour l'alimentation des électrodes en tension de base et à cette fin un transformateur échelonné avec redresseur, travaillant dans le même sens, protégé par des barrières de courant/tension contre la commande de la charge de base, dont la surtension peut être superposée à la tension de base au moyen d'un interrupteur réglable.

9. Dispositif selon la revendication 8, caractérisé en ce que la commutation de la surtension est disposée dans au moins une tête d'électrode.